# EUROPEAN PATENT APPLICATION

(11) **EP 4 841 915 A1**
(43) Date of publication of application: **18.11.2026**
(21) Application number: 25744555.1
(22) Date of filing: 21.01.2025
(51) Int. Cl.: H04B 10/25

(54) **DATA SENDING METHOD, COMMUNICATION APPARATUS, AND STORAGE MEDIUM**

(30) Priority: 27.01.2024 CN 202410119488
(71) Applicant: Huawei Technologies Co., Ltd., Shenzhen, Guangdong 518129 (CN)
(72) Inventor: QIN, Xiaopeng, Shenzhen, Guangdong 518129 (CN); CHEN, Xuemin, Shenzhen, Guangdong 518129 (CN); WANG, Jianbing, Shenzhen, Guangdong 518129 (CN); FAN, Zengxin, Shenzhen, Guangdong 518129 (CN)
(74) Representative: Huawei European IPR
(86) International application number: PCT/CN2025/073484
(87) International publication number: WO 2025/157114

(57) **Abstract**

Embodiments of this application are applied to the field of communication technologies, and disclose a data sending method, a communication apparatus, and a storage medium, to notify a peer end that a fault occurs on a channel when a port is faulty. The method in embodiments of this application includes: A first communication apparatus obtains that a first channel corresponding to a first optical module is abnormal, where the first channel is a channel between the first optical module and a second optical module; the first communication apparatus uses N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M; and the first communication apparatus sends control information to the first optical module, where the control information indicates the first optical module to disable light emitting corresponding to the first channel. In embodiments of this application, the light emitting corresponding to the first channel can be disabled, to notify the peer end that a fault occurs on the first channel.

## Description

This application claims priority to Chinese Patent Application No. 202410119488.3, filed with the China National Intellectual Property Administration on January 27, 2024 and entitled "DATA SENDING METHOD, COMMUNICATION APPARATUS, AND STORAGE MEDIUM", which is incorporated herein by reference in its entirety.

### TECHNICAL FIELD

Embodiments of this application relate to the field of communication technologies, and in particular, to a data sending method, a communication apparatus, and a storage medium.

### BACKGROUND

Currently, an optical module is widely used in high-speed interconnection between data center devices. In a current artificial intelligence (artificial intelligence, AI) training parameter plane network, a mainstream artificial intelligence AI server, a neural network processing unit (neural network processing unit, NPU), and a graphics processing unit (graphics processing unit, GPU) need to be interconnected through the optical module or a copper cable.

The copper cable supports a short distance and cannot be deployed across racks. Currently, a server is connected mainly through the optical module. In addition, due to a limited NPU/GPU capability and in consideration of cost-effectiveness, most NPUs/GPUs can provide only one 200 giga (giga, G) or 400G network interface card port. Therefore, provided that an optical module inserted into an NPU/GPU network interface card port is faulty, a remote direct memory access (remote direct memory access, RDMA) connection between an NPU/a GPU and another NPU/GPU is disconnected. As a result, an entire training task times out and is interrupted, and the optical module needs to be manually replaced, to restore the training task to a last check point, and restart training.

When a fault occurs on a channel of a light emitting device, the light emitting device cannot sense the fault, but a light receiving device can sense the fault. Therefore, fault notification between devices is an urgent problem to be resolved.

### SUMMARY

Embodiments of this application provide a data sending method, a communication apparatus, and a storage medium, to notify a peer end that a fault occurs on a channel when a port is faulty.

A first aspect of embodiments of this application provides a data sending method. In the method, a first communication apparatus obtains that a first channel corresponding to a first optical module is abnormal, where the first channel is a channel between the first optical module and a second optical module, and the first optical module is connected to the first communication apparatus.

The first communication apparatus uses N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M.

The first communication apparatus sends control information to the first optical module, where the control information indicates the first optical module to disable light emitting corresponding to the first channel.

In this implementation, the first communication apparatus disables the light emitting corresponding to the first channel, so that an abnormal signal appears on the first channel at a peer end, to notify the peer end that a fault occurs on the first channel.

In some possible implementations, a channel other than the N channels in the M channels is not used to send and/or receive data.

Specifically, the first communication apparatus shields the channel other than the N channels in the M channels, and does not process data on the channel.

In some possible implementations, a port of the first optical module is a 400G port, and M is 8. In this case, N is 4. In other words, remaining four channels may form one 200G port.

In some possible implementations, the control information further indicates the first optical module to disable light emitting corresponding to a third channel, and the third channel is a channel between the first optical module and the second optical module.

In some possible implementations, an abnormality occurs on a fourth channel, the fourth channel is a channel between the first optical module and the second optical module, and that the first communication apparatus uses, based on first abnormality information, the N channels in the M channels corresponding to the first optical module to send and/or receive data includes:

If the first channel and the fourth channel meet a rate reduction condition, the first communication apparatus uses the N channels in the M channels corresponding to the first optical module to send and/or receive data, where the N channels do not include a fifth channel, and the fifth channel is at least one channel in the M channels that corresponds to the fourth channel.

In this implementation, the first communication apparatus shields a faulty port, and forms a low-rate port by using a remaining non-abnormal channel, so that a rate reduction effect is achieved without interrupting an AI training task.

A second aspect of embodiments of this application provides a data sending method. In the method, a first communication apparatus obtains that a first channel corresponding to a first optical module is abnormal, where the first channel is a channel between the first optical module and a second optical module, and the first optical module is connected to the first communication apparatus.

The first communication apparatus uses N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M. The first communication apparatus sends fault information to a controller based on first abnormality information, where the fault information indicates that an abnormality occurs on the first channel.

In some possible implementations, the fault information includes at least one of the following: first port information, second port information, a quantity of channels of a first port, and fault information of the first channel, the first port information includes a port number and an internet protocol (internet protocol, IP) address of the first port, the second port information includes a port number and an IP address of a second port, the first port is a local port, and the second port is a peer port.

In some possible implementations, a channel other than the N channels in the M channels is not used to send and/or receive data.

In some possible implementations, an abnormality occurs on a fourth channel, the fourth channel is a channel between the first optical module and the second optical module, and that the first communication apparatus uses, based on the first abnormality information, the N channels in the M channels corresponding to the first optical module to send and/or receive data includes:

If the first channel and the fourth channel meet a rate reduction condition, the first communication apparatus uses the N channels in the M channels corresponding to the first optical module to send and/or receive data, where the N channels do not include a fifth channel, and the fifth channel is at least one channel in the M channels that corresponds to the fourth channel.

A third aspect of embodiments of this application provides a data sending method. In the method, a second communication apparatus obtains that a second channel corresponding to a second optical module is abnormal, where the first channel is a channel between a first optical module and the second optical module, and the second optical module is connected to the second communication apparatus. That the second communication apparatus obtains that the first channel corresponding to the second optical module is abnormal includes: The second communication apparatus does not receive, through the first channel, an optical signal sent by the first optical module, and the first optical module actively disables light emitting corresponding to the first channel.

The second communication apparatus uses N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

In some possible implementations, a channel other than the N channels in the M channels is not used to send and/or receive data.

In some possible implementations, an abnormality occurs on a fourth channel, the fourth channel is a channel between the first optical module and the second optical module, and that the first communication apparatus uses, based on first abnormality information, the N channels in the M channels corresponding to the first optical module to send and/or receive data includes:

If the first channel and the fourth channel meet a rate reduction condition, the first communication apparatus uses the N channels in the M channels corresponding to the first optical module to send and/or receive data, where the N channels do not include a fifth channel, and the fifth channel is at least one channel in the M channels that corresponds to the fourth channel.

A fourth aspect of embodiments of this application provides a data sending method. In the method, a second communication apparatus receives fault information from a controller, where the fault information indicates that an abnormality occurs on a first channel, the first channel is a channel between a first optical module and a second optical module, and the second optical module is connected to the second communication apparatus.

The second communication apparatus uses, based on the fault information, N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

In some possible implementations, the fault information includes at least one of the following: first port information, second port information, a quantity of channels of a first port, and fault information of the first channel, the first port information includes a port number and an internet protocol IP address of the first port, the second port information includes a port number and an IP address of a second port, the first port is a local port, and the second port is a peer port.

In some possible implementations, the fault information includes at least one of the following: first port information, second port information, a quantity of channels of a first port, and fault information of the first channel, the first port information includes a port number and an internet protocol IP address of the first port, the second port information includes a port number and an IP address of a second port, the first port is a local port, and the second port is a peer port.

In some possible implementations, a channel other than the N channels in the M channels is not used to send and/or receive data.

In some possible implementations, an abnormality occurs on a fourth channel, the fourth channel is a channel between the first optical module and the second optical module, and that the first communication apparatus uses, based on first abnormality information, the N channels in the M channels corresponding to the first optical module to send and/or receive data includes:

If the first channel and the fourth channel meet a rate reduction condition, the first communication apparatus uses the N channels in the M channels corresponding to the first optical module to send and/or receive data, where the N channels do not include a fifth channel, and the fifth channel is at least one channel in the M channels that corresponds to the fourth channel.

A fifth aspect of embodiments of this application provides a data sending method. In the method, a first optical module disables a signal of a second channel, or sends, to a first communication apparatus through the second channel, a signal received through a first channel, where the first channel is a channel between the first optical module and a second optical module, the first optical module is connected to the first communication apparatus, the second channel is at least one channel that is in M channels and that corresponds to the first channel, and the M channels are channels between the first optical module and the first communication apparatus.

The first optical module uses N channels in the M channels to receive and/or send data, where the N channels do not include the second channel, and N is less than M.

The first optical module receives control information from the first communication apparatus, where the second control information indicates the first optical module to disable light emitting corresponding to the first channel.

A sixth aspect of embodiments of this application provides a data sending method. In the method, a second optical module disables a signal of a second channel, or sends, to a second communication apparatus through the second channel, a signal received through a first channel, where the first channel is a channel between a first optical module and the second optical module, the second optical module is connected to the second communication apparatus, the second channel is at least one channel that is in M channels and that corresponds to the first channel, and the M channels are channels between the second optical module and the second communication apparatus.

The second optical module uses N channels in the M channels to receive and/or send data, where the N channels do not include the second channel, and N is less than M.

In some possible implementations, a channel other than the N channels in the M channels is not used to send and/or receive data.

A seventh aspect of embodiments of this application provides a data sending method. In the method, a controller receives fault information from a first communication apparatus, and the fault information indicates that an abnormality occurs on a first channel. The controller sends the fault information to a second communication apparatus.

An eighth aspect of embodiments of this application provides a communication apparatus, including:
an obtaining unit, configured to obtain that a first channel corresponding to a first optical module is abnormal, where the first channel is a channel between the first optical module and a second optical module, and the first optical module is connected to a first communication apparatus;
a processing unit, configured to use N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M; and
a sending unit, configured to send control information to the first optical module, where the control information indicates the first optical module to disable light emitting corresponding to the first channel.

A ninth aspect of embodiments of this application provides a communication apparatus, including:
an obtaining unit, configured to obtain that a first channel corresponding to a first optical module is abnormal, where the first channel is a channel between the first optical module and a second optical module, and the first optical module is connected to a first communication apparatus; and
a processing unit, configured to use N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M, where the first communication apparatus sends fault information to a controller based on first abnormality information, where the fault information indicates that an abnormality occurs on the first channel.

A tenth aspect of embodiments of this application provides a communication apparatus, including:
an obtaining unit, configured to obtain that a second channel corresponding to a second optical module is abnormal, where the first channel is a channel between a first optical module and the second optical module, and the second optical module is connected to a second communication apparatus, where that the second communication apparatus obtains that the first channel corresponding to the second optical module is abnormal includes: the second communication apparatus does not receive, through the first channel, an optical signal sent by the first optical module, and the first optical module actively disables light emitting corresponding to the first channel; and
a processing unit, configured to use N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

An eleventh aspect of embodiments of this application provides a communication apparatus, including:
a receiving unit, configured to receive fault information from a controller, where the fault information indicates that an abnormality occurs on a first channel, the first channel is a channel between a first optical module and a second optical module, and the second optical module is connected to a second communication apparatus; and
a processing unit, configured to use, based on the fault information, N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

A twelfth aspect of embodiments of this application provides an optical module, including:
a processing unit, configured to: disable a signal of a second channel, or send, to a first communication apparatus through the second channel, a signal received through a first channel, where the first channel is a channel between a first optical module and a second optical module, the first optical module is connected to the first communication apparatus, the second channel is at least one channel that is in M channels and that corresponds to the first channel, and the M channels are channels between the first optical module and the first communication apparatus; and
an interface unit, configured to use N channels in the M channels to receive and/or send data, where the N channels do not include the second channel, and N is less than M.

The interface unit is further configured to receive control information from the first communication apparatus, where the second control information indicates the first optical module to disable light emitting corresponding to the first channel.

A thirteenth aspect of embodiments of this application provides an optical module, including:
a processing unit, configured to: disable a signal of a second channel, or send, to a second communication apparatus through the second channel, a signal received through a first channel, where the first channel is a channel between a first optical module and a second optical module, the second optical module is connected to the second communication apparatus, the second channel is at least one channel that is in M channels and that corresponds to the first channel, and the M channels are channels between the second optical module and the second communication apparatus; and
an interface unit, configured to use N channels in the M channels to receive and/or send data, where the N channels do not include the second channel, and N is less than M.

A fourteenth aspect of embodiments of this application provides a communication apparatus, including:
a processor, configured to execute a program, to enable the communication apparatus to perform the method according to any one of the first aspect, the second aspect, the third aspect, or the fourth aspect, and the possible implementations of the first aspect, the second aspect, the third aspect, or the fourth aspect.

Optionally, the communication apparatus further includes a memory, the processor is coupled to the memory, and the memory is configured to store a program.

A fifteenth aspect of embodiments of this application provides an optical module, including:
a processor, configured to execute a program, to enable the optical module to perform the method according to any one of the fifth aspect or the sixth aspect and the possible implementations of the fifth aspect or the sixth aspect.

Optionally, the optical module further includes a memory, the processor is coupled to the memory, and the memory is configured to store a program.

A sixteenth aspect of embodiments of this application provides a data sending system, including a communication apparatus for performing any one of the first aspect and the possible implementations of the first aspect, a communication apparatus for performing any one of the third aspect and the possible implementations of the third aspect, a communication apparatus for performing any one of the fifth aspect and the possible implementations of the fifth aspect, and a communication apparatus for performing any one of the sixth aspect and the possible implementations of the sixth aspect.

Alternatively,
the data sending system includes a communication apparatus for performing any one of the second aspect and the possible implementations of the second aspect, a communication apparatus for performing any one of the fourth aspect and the possible implementations of the fourth aspect, and a communication apparatus for performing any one of the seventh aspect and the possible implementations of the seventh aspect.

A seventeenth aspect of embodiments of this application provides a computer-readable storage medium, including instructions. When the instructions are run on a computer, the computer is enabled to perform the method according to the first aspect, the computer is enabled to perform the method according to the second aspect, the computer is enabled to perform the method according to the third aspect, the computer is enabled to perform the method according to the fourth aspect, the computer is enabled to perform the method according to the fifth aspect, or the computer is enabled to perform the method according to the sixth aspect.

An eighteenth aspect of embodiments of this application provides a computer program product including instructions. When the computer program product runs on a computer, the computer is enabled to perform the method according to the first aspect, the computer is enabled to perform the method according to the second aspect, the computer is enabled to perform the method according to the third aspect, the computer is enabled to perform the method according to the fourth aspect, the computer is enabled to perform the method according to the fifth aspect, or the computer is enabled to perform the method according to the sixth aspect.

### BRIEF DESCRIPTION OF DRAWINGS

FIG. 1 is a diagram of a system architecture according to an embodiment of this application;
FIG. 2 is a diagram of an embodiment of optical module interaction according to an embodiment of this application;
FIG. 3 is a diagram of an embodiment of a data sending method according to an embodiment of this application;
FIG. 4 is a diagram of an embodiment of a first optical module according to an embodiment of this application;
FIG. 5 is a diagram of another embodiment of a data sending method according to an embodiment of this application;
FIG. 6 is a diagram of an embodiment of a communication apparatus according to an embodiment of this application;
FIG. 7 is a diagram of another embodiment of a communication apparatus according to an embodiment of this application;
FIG. 8 is a diagram of an embodiment of a neural network processing unit according to an embodiment of this application; and
FIG. 9 is a diagram of another embodiment of a communication apparatus according to an embodiment of this application.

### DESCRIPTION OF EMBODIMENTS

Embodiments of this application provide a data sending method, a communication apparatus, and a storage medium, and are applied to the field of communication technologies, to notify a peer end that a fault occurs on a channel when a port is faulty.

The following describes embodiments of this application with reference to the accompanying drawings. A person of ordinary skill in the art may learn that, with development of technologies and emergence of new scenarios, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects having a same attribute are described in embodiments of this application. In addition, the terms "include", "have", and any variant thereof mean to cover non-exclusive inclusion, so that a process, method, system, product, or device that includes a series of units is not necessarily limited to those units, but may include other units not expressly listed or inherent to such a process, method, product, or device.

In this application, "indicate" may include "directly indicate" and "indirectly indicate". When a piece of indication information indicates A, the indication information may directly indicate A or indirectly indicate A, but it does not indicate that the indication information definitely carries A.

In addition, specific indication manners may alternatively be various existing indication manners, for example, but not limited to, the foregoing indication manners and various combinations thereof. For details of the various indication manners, refer to a conventional technology. Details are not described in this specification. It can be learned from the foregoing descriptions that, for example, when a plurality of pieces of information of a same type need to be indicated, different information may be indicated in different manners. In a specific implementation process, a needed indication manner may be selected based on a specific requirement. The selected indication manner is not limited in embodiments of this application. In this way, the indication manners in embodiments of this application should be understood as covering various methods that can enable a to-be-indicated party to learn of to-be-indicated information.

In embodiments of this application, descriptions such as "when", "in a case", and "if" all mean that a device performs corresponding processing in a specific objective situation, but are not intended to limit time, do not require that the device has a determining action during implementation, and do not mean any other limitation.

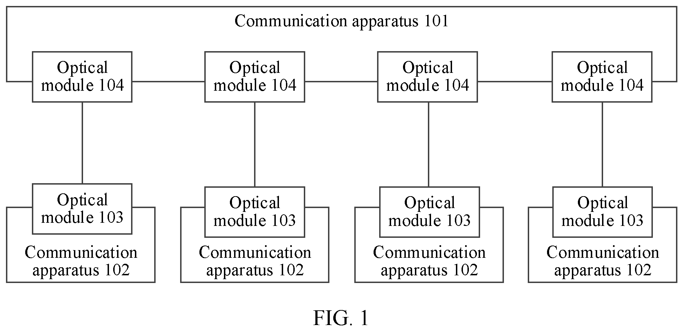

Refer to FIG. 1. The following briefly describes a system architecture on which a data sending method in embodiments of this application is based.

In the system architecture, a communication apparatus 101 is connected to a plurality of communication apparatuses 102, and the communication apparatus 101 and the communication apparatus 102 are interconnected through optical modules. Specifically, the communication apparatus 101 includes a plurality of interfaces, and an optical module 104 may be inserted into any one of the plurality of interfaces, so that the communication apparatus 101 is connected to the optical module 104. The communication apparatus 102 includes one interface, and an optical module 103 may be inserted into the interface, so that the communication apparatus 101 is connected to the optical module 103. The optical module 103 is connected to the optical module 104 through an optical fiber, so that the communication apparatus 101 and the communication apparatus 102 are interconnected through the optical modules.

It should be understood that, after the optical module is inserted into the interface of the communication apparatus 101, the optical module has a connection relationship with the communication apparatus 101, and is an optical module connected to the communication apparatus 101, which is referred to as "an optical module of the communication apparatus 101" for short below.

It should be understood that the optical module may be a part of components of the communication apparatus 101. In this case, "the optical module of the communication apparatus 101" in the following means that the communication apparatus 101 includes a component optical module.

It should be understood that the communication apparatus 101 may be a network device like a switch, a router (router), a virtual switch (virtual switch), a virtual router (virtual router), a packet transport network (packet transport network, PTN) device, or an optical transport network (optical transport network, OTN) device. A device form of the communication apparatus 101 is not limited in this application.

It should be understood that the communication apparatus 102 may be an NPU, a GPU, or a network interface card in a server, or may be a server included by the NPU or the GPU. A device form of the communication apparatus 102 is not limited in this application.

It should be understood that the communication apparatus 102 may alternatively be a network device like a switch, a router (router), a virtual switch (virtual switch), a virtual router (virtual router), a packet transport network (packet transport network, PTN) device, or an optical transport network (optical transport network, OTN) device. For example, in a data center network, the communication apparatus 101 may be a spine spine switch, and the communication apparatus 102 may be a leaf leaf switch.

In a possible implementation, the communication apparatus 101 and the communication apparatus 102 may be interconnected through another communication apparatus. The communication apparatus may implement photoelectric conversion and/or data transmission. This is not specifically limited herein.

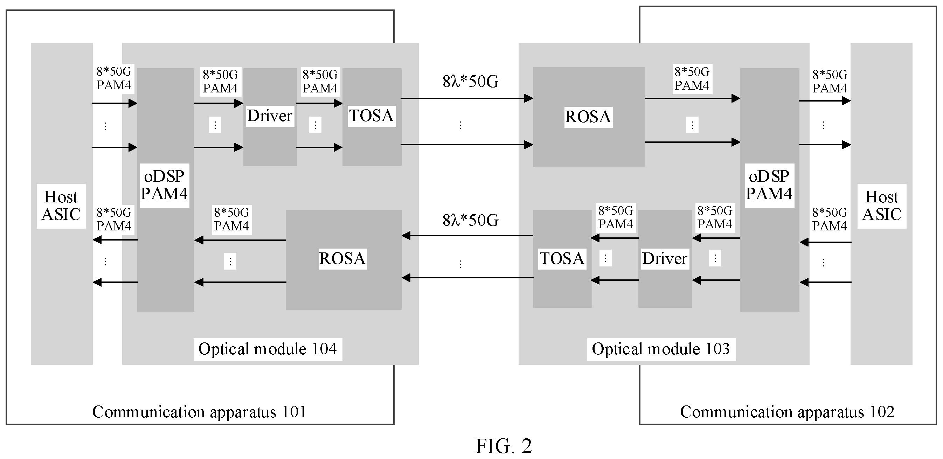

FIG. 2 shows a scenario in which an optical module 103 and an optical module 104 are interconnected. The optical module 103 includes a transmitter optical subassembly (transmitter optical subassembly, TOSA), a receiver optical subassembly (receiver optical subassembly, ROSA), and an optical digital signal processing (optical digital signal processing, oDSP) module. A main function of the TOSA is to convert an electrical signal into an optical signal, and the TOSA usually includes an optical device like a laser. A main function of the ROSA is to convert an optical signal transmitted from a peer TOSA into an electrical signal, and the ROSA includes a photodiode, an optical interface, a metal or plastic shell, and an electrical interface. Same as the TOSA, a specific component of the ROSA depends on a specific function and application of the optical module. The ROSA may also have another component like an amplifier, which is used to recover an input signal that is degraded due to long-distance transmission. The oDSP module may be configured to modulate and demodulate a laser signal, to improve a data transmission speed.

Based on the foregoing architecture, this application provides a data transmission method. The following uses an example in which a fault occurs on the optical module of the communication apparatus 101 for description. When a fault occurs on one or more channels in the optical module of the communication apparatus 101, the communication apparatus 102 senses an abnormality, and the communication apparatus 102 uses N channels in M channels between the communication apparatus 102 and the optical module to receive and/or send data, and indicates that an abnormality occurs on a channel at a peer end (for the communication apparatus 102, the peer end is the communication apparatus 101, and for the communication apparatus 101, a peer end is the communication apparatus 102).

It should be understood that the data transmission method provided in this application may alternatively be that a fault occurs on one or more channels in the optical module of the communication apparatus 102, and after the communication apparatus 101 senses an abnormality, the communication apparatus 101 indicates that the abnormality occurs on a channel at the peer end. In other words, a solution implemented by the communication apparatus 101 may alternatively be implemented by the communication apparatus 102. In this case, a solution implemented by the communication apparatus 102 is implemented by the communication apparatus 101.

In this embodiment of this application, there are two manners of indicating that an abnormality occurs on a channel at a peer end. The following separately describes the two manners.

It should be understood that steps performed by a first communication apparatus, a second communication apparatus, a first optical module, and a second optical module in the method may alternatively be performed by some components (for example, a processor, a chip, or a chip system) in the first communication apparatus, the second communication apparatus, the first optical module, and the second optical module, or the method may be implemented by a logical module or software that can implement all or some functions.

The first communication apparatus in the method may be the communication apparatus 102 in FIG. 1. In this case, the first optical module is the optical module 103. The second communication apparatus may be the communication apparatus 101 in FIG. 1. In this case, the second optical module is the optical module 104.

### 1. Indication by disabling light emitting corresponding to an abnormal channel

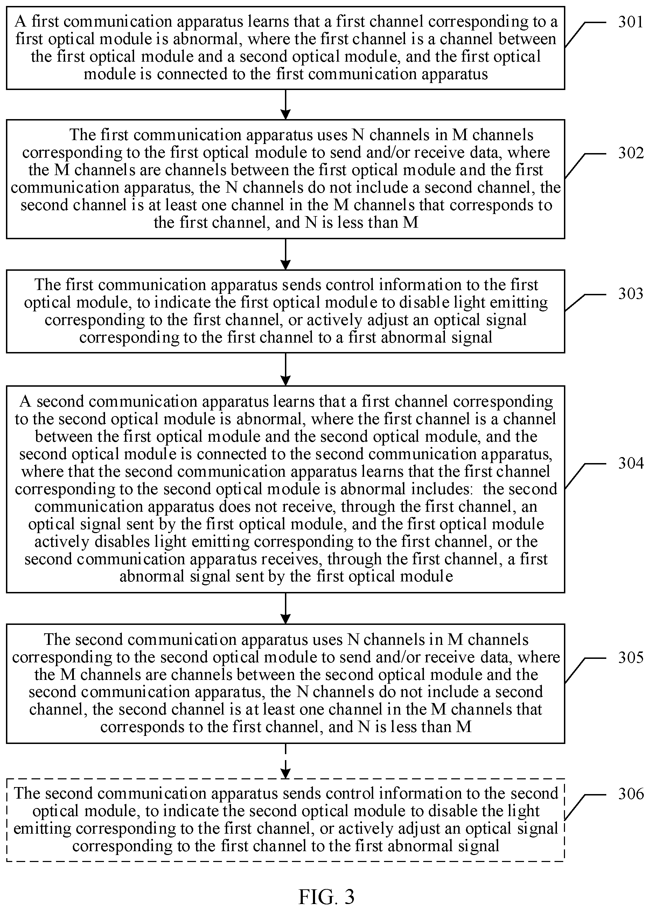

Refer to FIG. 3. A data sending method according to an embodiment of this application includes the following steps.

301: A first communication apparatus obtains that a first channel corresponding to a first optical module is abnormal, where the first channel is a channel between the first optical module and a second optical module, and the first optical module is connected to the first communication apparatus.

In this embodiment, a second communication apparatus sends data to the first communication apparatus through the second optical module, and the first communication apparatus receives, through the first optical module, the data sent by the second communication apparatus. Specifically, a plurality of channels are established between the first optical module and the second optical module to send and/or receive data. For example, eight channels (for example, the eight channels may be channels between the TOSA of the communication apparatus 101 and the ROSA of the communication apparatus 102 in FIG. 2) are established between the first optical module and the second optical module, and data transmission may be implemented at a rate of 400 Gbps. A first channel in the eight channels connects the first optical module and the second optical module, the second optical module includes an interface connected to the first channel, and the first optical module includes an interface connected to the first channel. The second optical module may implement, by using a laser, control of light emitting corresponding to the first channel, to implement data transmission, or in other words, control data transmission. As the other end of the first channel, the first optical module may alternatively receive an optical signal transmitted through the first channel, to implement data receiving. Certainly, not only data sending can be implemented, but also data receiving can be implemented on one channel. In other words, the second optical module may send data to the first optical module through the first channel. In this case, the first optical module receives, through the first channel, the data sent by the second optical module. The first optical module may alternatively send data to the second optical module through the same first channel. In this case, the second optical module receives, through the first channel, the data sent by the first optical module. If only data sending can be implemented on one channel, implementation of this embodiment of this application is not affected. In specific implementation, there is another corresponding channel to implement data receiving. For example, the second optical module sends the data to the first optical module through the first channel, and the first optical module receives, through the first channel, the data sent by the second optical module. The first optical module sends the data to the second optical module through another channel corresponding to the first channel, and the second optical module receives, through the channel, the data sent by the first optical module.

There are a plurality of implementations in which the first communication apparatus obtains that the first channel corresponding to the first optical module is abnormal.

In a first implementation, when an abnormality occurs on the second optical module connected to the second communication apparatus, for example, light emitting power corresponding to the first channel decreases or no light is emitted because the laser is aged and faulty, the first optical module connected to the first communication apparatus senses that an abnormality occurs on the corresponding first channel, and disables a signal sent to the first communication apparatus. Specifically, a signal passing through a channel that is between the first communication apparatus and the first optical module and that corresponds to the first channel is disabled. If the first communication apparatus does not receive the signal of the channel that is between the first communication apparatus and the first optical module and that corresponds to the first channel, the first communication apparatus determines that the first channel is abnormal. This step may be implemented by the oDSP module in FIG. 2.

In a second implementation, when an abnormality occurs on the second optical module connected to the second communication apparatus, for example, light emitting power corresponding to the first channel decreases because the laser is aged and faulty, a signal received by the first optical module connected to the first communication apparatus is transparently transmitted to the first communication apparatus. Specifically, the transparent transmission herein includes an operation of photoelectric conversion, and specifically, the signal is sent through a channel that is between the first communication apparatus and the first optical module and that corresponds to the first channel. After receiving the signal, the first communication apparatus determines that signal quality is poor, and in this case, determines that the first channel is abnormal. This step may be implemented by the oDSP module in FIG. 2.

In a specific implementation, after obtaining that the first channel corresponding to the first optical module is abnormal, the first communication apparatus enables a port that is in the first communication apparatus and that corresponds to the first optical module to enter a DOWN state.

302: The first communication apparatus uses N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M.

After obtaining that the first channel corresponding to the first optical module is abnormal, the first communication apparatus determines that an abnormality occurs on the first channel corresponding to the first optical module connected to the first communication apparatus, and all channels, for example, the eight channels, between the first optical module and the second optical module cannot be used for data transmission. In this way, a part of channels that do not include the abnormal channel are used for data transmission.

In a specific implementation, the M channels (for example, the channels between the TOSA of the communication apparatus 101 and the ROSA of the communication apparatus 102 in FIG. 2) are included between the first communication apparatus and the first optical module, and X channels (for example, channels between an oDSP chip and an ASIC chip of the communication apparatus 102 in FIG. 2) are included between the first optical module and the second optical module. In an implementation, X=M. In another implementation, X may not be equal to M, and there is a correspondence between the M channels between the first communication apparatus and the first optical module and the X channels between the first optical module and the second optical module. For example, X=8, and M=16. In this case, two channels between the first communication apparatus and the first optical module correspond to one channel between the first optical module and the second optical module. Numbers of X and M are not limited in this application.

In a specific implementation, the first communication apparatus uses the N channels in the M channels corresponding to the first optical module to send and/or receive data. In other words, the first communication apparatus does not use a channel other than the N channels in the M channels to send and/or receive the data. A specific implementation is that, the first communication apparatus shields the channel other than the N channels in the M channels corresponding to the first optical module, and does not shield the N channels, where the N channels do not include the second channel, the second channel is the at least one channel in the M channels that corresponds to the first channel, and N is less than M. In other words, the first communication apparatus sends the data to the first optical module through the N channels, and the first optical module receives the data through the N channels. In this case, the first communication apparatus uses a part of channels to send the data to the first optical module. Then, the data is sent to the second optical module through Y channels corresponding to the N channels, where the Y channels are channels between the first optical module and the second optical module. The Y channels do not include the first channel, so that the first optical module uses the part of channels that do not include the abnormal first channel to send the data.

In a specific implementation, an abnormality also occurs on a third channel, the third channel is a channel between the first optical module and the second optical module, and that the first communication apparatus uses, based on first abnormality information, the N channels in the M channels corresponding to the first optical module to send and/or receive data includes:

The first communication apparatus uses the N channels in the M channels corresponding to the first optical module to send and/or receive data, where the N channels do not include a fourth channel, and the fourth channel is at least one channel in the M channels that corresponds to the third channel.

In a specific implementation, in the method, determining of a rate reduction condition further needs to be performed. The rate reduction condition includes determining whether a rate corresponding to a non-abnormal channel meets a first rate, where the first rate is a predefined port rate compatible with a standard, for example, 200 Gbps. If the rate reduction condition is met, it indicates that the rate corresponding to the non-abnormal channel is greater than or equal to the first rate.

Specifically, after obtaining that the first channel corresponding to the first optical module is abnormal, the first communication apparatus determines whether a rate corresponding to a remaining non-abnormal channel meets the first rate. The non-abnormal channel is a channel other than the first channel, and the non-abnormal channel may be all channels other than the first channel, or may be a part of channels other than the first channel. For example, a rate of a port of the first communication apparatus is 400 Gbps. In other words, a rate of the first optical module is 400 Gbps. When X=8, a channel 0 to a channel 7 are included, and the first channel is a channel 6, one channel corresponds to a rate of 50 Gbps. The non-abnormal channel may be all the channels other than the first channel, that is, remaining seven channels, and a corresponding rate is 350 Gbps, which meets a requirement that the first rate is 200 Gbps. For another example, the non-abnormal channel may be the part of channels other than the first channel, and may be four channels other than the first channel, for example, may be channels 0, 1, 2, and 3. In this case, a rate corresponding to the four channels is 200 Gbps, which also meets a requirement that the first rate is 200 Gbps.

Specifically, after obtaining that both the first channel and the third channel corresponding to the first optical module are abnormal, the first communication apparatus determines whether a rate corresponding to a remaining non-abnormal channel meets the first rate. The non-abnormal channel is a channel other than the first channel and the third channel, and the non-abnormal channel may be all channels other than the first channel and the third channel, or may be a part of channels other than the first channel and the third channel. Specifically, a manner of determining whether the rate corresponding to the remaining non-abnormal channel meets the first rate is the same as the foregoing determining manner used when only the first channel is abnormal. Details are not described herein again. Optionally, the non-abnormal channel is a plurality of channels that are adjacent in position. In other words, the non-abnormal channel is a plurality of channels with consecutive channel numbers. Optionally, the non-abnormal channel includes a 1^{st} channel or a last channel. The 1^{st} or the last herein may represent a start position or an end position, or may represent a smallest number or a largest number. For example, when there are the eight channels, the 1^{st} channel may be the channel 0, and the last channel may be the channel 7.

It should be understood that, in the foregoing implementation, when it is determined that the rate corresponding to the non-abnormal channel meets the first rate, whether a rate corresponding to a non-abnormal channel in the channels between the first communication apparatus and the first optical module meets the first rate may be further determined. For specific implementation, refer to the foregoing implementation. Details are not described herein again.

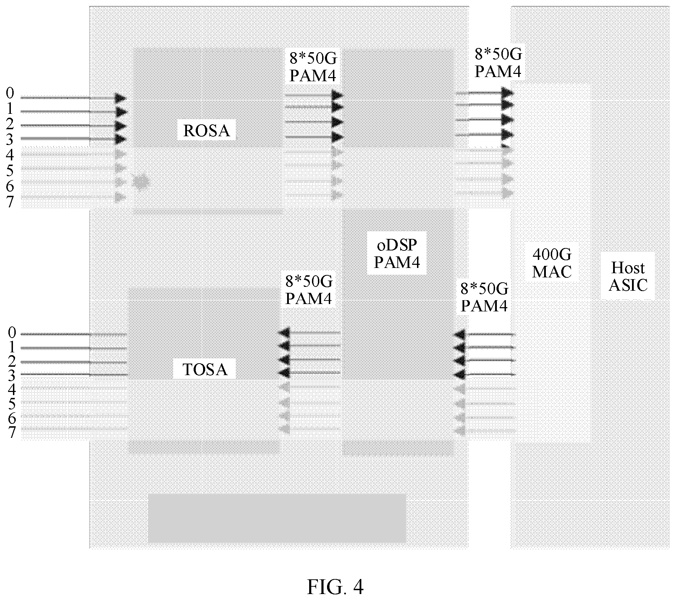

For example, because the 200 Gbps port needs four channels to perform data sending, the first optical module allows faults to occur on a maximum of four channels, and remaining four channels may form one 200 Gbps port. As shown in FIG. 4, if the first channel is the channel 6, and the third channel is the channel 5, the first channel and the third channel meet the rate reduction condition, and the first communication apparatus may indicate the first optical module to perform rate reduction.

For example, when the first communication apparatus is an NPU, a rate of an NPU port is 400 Gbps. In other words, the rate of the first optical module connected to the NPU is 400 Gbps. After the NPU obtains that the first channel corresponding to the first optical module is abnormal, the NPU switches the port rate from 400 Gbps to 200 Gbps. The eight channels are included between the first optical module and the second optical module, including the channel 0 to the channel 7, and the first channel is the channel 6. There are eight channels between the NPU and the first optical module, for example, a channel A to a channel H, where the channel 6 corresponds to the channel G. The NPU shields the channel E, the channel F, the channel G, and the channel H in the channel A to the channel H, and uses the channels A, B, C, and D to send the data. The port rate is reduced from 400 Gbps to 200 Gbps. The first optical module also uses the channel 0, the channel 1, the channel 2, and the channel 3 corresponding to the channels A, B, C, and D to send the data, and a sending rate of the optical module is reduced to 200 Gbps.

303: The first communication apparatus sends control information to the first optical module, to indicate the first optical module to disable light emitting corresponding to the first channel, or actively adjust an optical signal corresponding to the first channel to a first abnormal signal.

The first abnormal signal includes a signal with low light emitting power.

For example, in the foregoing example, the NPU sends the control information to the first optical module, to indicate the first optical module to disable light emitting corresponding to the channel 7.

In a possible implementation, the control information may further indicate the first optical module to disable light emitting corresponding to the third channel in the M channels, where the third channel is not any one of the N channels. For example, the control information may indicate the first optical module to disable light emitting corresponding to the channel 6 and the channel 7 in the foregoing example, where the channel 7 is the third channel, and the channel 6 is the first channel.

It should be understood that, certainly, the control information may alternatively indicate the first optical module to disable light emitting corresponding to another channel in the M channels. Provided that disabling the light emitting of the channel does not affect data transmission, this falls within the protection scope of this application. For example, in the foregoing example, disabling the channels 4, 5, 6, and 7 is feasible. This step may be implemented by the oDSP module in FIG. 2.

It should be noted that the control information may be included in a packet sent by the first communication apparatus to the first optical module, or may be borne in a signal sent by the first communication apparatus to the first optical module or an instruction sent by the first communication apparatus to the first optical module. This is not specifically limited herein.

It should be understood that, in this embodiment of this application, ports corresponding to the first optical module and the second optical module are 200 Gbps/400 Gbps. In some possible implementations, the port of the optical module may further support another rate. This is not specifically limited herein.

304: The second communication apparatus obtains that a first channel corresponding to the second optical module is abnormal, where the first channel is a channel between the first optical module and the second optical module, and the second optical module is connected to the second communication apparatus, where that the second communication apparatus obtains that the first channel corresponding to the second optical module is abnormal includes: the second communication apparatus does not receive, through the first channel, an optical signal sent by the first optical module, and the first optical module actively disables light emitting corresponding to the first channel, or the second communication apparatus receives, through the first channel, a first abnormal signal sent by the first optical module.

The first abnormal signal includes a signal with low light emitting power.

305: The second communication apparatus uses N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

For a specific implementation of step 305, refer to step 302. In this case, the step implemented by the first communication apparatus in step 302 is implemented by the second communication apparatus, and the step implemented by the first optical module is implemented by the second optical module. Details are not described herein again.

Optionally, 306: The second communication apparatus sends control information to the second optical module, to indicate the second optical module to disable the light emitting corresponding to the first channel, or actively adjust an optical signal corresponding to the first channel to the first abnormal signal. This step may be implemented by the oDSP module and the TOSA module in FIG. 2.

After both the first communication apparatus and the second communication apparatus perform transmission of the data by using the N channels that can work normally, or in other words, after both the first communication apparatus and the second communication apparatus perform transmission of the data by using the non-abnormal channel, the two communication apparatuses perform normal negotiation, so that a port of the communication apparatus is restored to an UP state and works normally.

In this embodiment of this application, the first communication apparatus and the second communication apparatus may send the data through a part of channels in the optical module, to implement rate reduction. This avoids interruption of an AI training task caused by port DOWN and unavailability of a link between ports due to a fault of one or more channels, to improve training performance, so as to improve performance of an AI service.

In a possible implementation, after obtaining that a corresponding optical module is abnormal, the first communication apparatus or the second communication apparatus feeds back abnormality information to a user. After the training task ends or related training content is stored, the first communication apparatus or the second communication apparatus may prompt the user to replace the optical module. For example, after a second optical module of a switch is removed, an optical signal cannot be received through any channel of the first optical module of the NPU, resulting in an abnormality. In this case, the NPU restores a plurality of shielded channels. After the second optical module is reinstalled in the switch and then initialized, light emitting corresponding to all channels in the second optical module is enabled, the optical signal can be received through all the channels of the first optical module, and the two ends negotiate to restore the UP state.

### 2. Indication by sending fault information to a controller

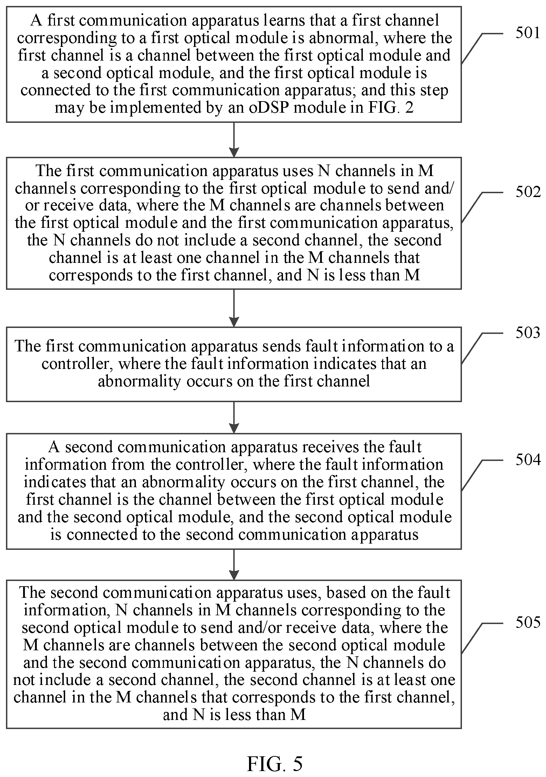

Refer to FIG. 5. An embodiment of this application provides a data sending method. In the method, for a connection relationship between a first communication apparatus and a first optical module, a connection relationship between a second communication apparatus and a second optical module, descriptions of a channel between the first optical module and the second optical module, descriptions of a channel between the first communication apparatus and the first optical module, and descriptions of a channel between the second communication apparatus and the second optical module, refer to related parts in the foregoing embodiment. The method includes the following steps.

501: The first communication apparatus obtains that a first channel corresponding to the first optical module is abnormal, where the first channel is a channel between the first optical module and the second optical module, and the first optical module is connected to the first communication apparatus; and this step may be implemented by the oDSP module in FIG. 2.

502: The first communication apparatus uses N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M.

For specific implementations of steps 501 and 502 in this embodiment, refer to the implementations of steps 301 and 302 in the embodiment shown in FIG. 3. Details are not described herein again.

503: The first communication apparatus sends the fault information to the controller, where the fault information indicates that an abnormality occurs on the first channel.

The first communication apparatus generates the fault information and reports the fault information to the controller. The fault information includes one or more of first port information, second port information, a quantity of channels of a first port, and fault information of the first channel. The first port information includes a port number and an IP address of a local port, and the second port information includes a port number and an IP address of a peer port. It should be understood that the fault information may further include other information indicating a port or the first channel. This is not specifically limited herein.

In a possible implementation, a link layer discovery protocol (link layer discovery protocol, LLDP) is enabled between the first communication apparatus and the second communication apparatus. The protocol is used to enable devices in a network to discover each other and notify the device of device and port information of another connected device.

In a possible implementation, the first communication apparatus and the second communication apparatus are connected to the controller through a management plane network or a service plane network. The fault information is sent through the service plane network or the management plane network.

504: The second communication apparatus receives the fault information from the controller, where the fault information indicates that an abnormality occurs on the first channel, the first channel is the channel between the first optical module and the second optical module, and the second optical module is connected to the second communication apparatus.

The controller notifies the second communication apparatus of the fault information through the management plane network or the service plane network, and the second communication apparatus receives the fault information from the controller.

Specifically, after the second communication apparatus receives the fault information from the controller, the second communication apparatus determines that the first channel is abnormal.

505: The second communication apparatus uses, based on the fault information, N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

For a specific implementation of step 505 in this embodiment, refer to the implementation of step 305 in the embodiment shown in FIG. 3. Details are not described herein again.

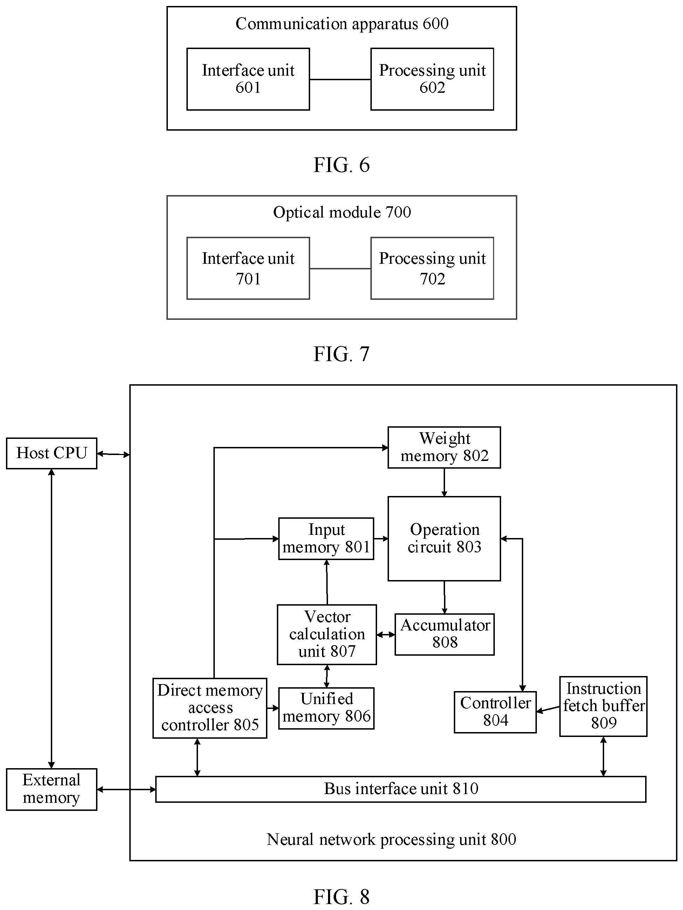

The foregoing describes the data sending method in embodiments of this application, and the following describes a communication apparatus in embodiments of this application. In a possible implementation, a communication apparatus 600 shown in FIG. 6 may perform the method steps performed by the first communication apparatus shown in FIG. 3. The communication apparatus 600 includes:
an interface unit 601, configured to obtain that a first channel corresponding to a first optical module is abnormal, where the first channel is a channel between the first optical module and a second optical module, and the first optical module is connected to the first communication apparatus; and
a processing unit 602, configured to use N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M.

The interface unit 601 is further configured to send control information to the first optical module, where the control information indicates the first optical module to disable light emitting corresponding to the first channel.

In a possible implementation, a communication apparatus 600 shown in FIG. 6 may perform the method steps performed by the second communication apparatus shown in FIG. 3. The communication apparatus 600 includes:
an interface unit 601, configured to obtain that a first channel corresponding to a first optical module is abnormal, where the first channel is a channel between the first optical module and a second optical module, and the first optical module is connected to a first communication apparatus; and
a processing unit 602, configured to use N channels in M channels corresponding to the first optical module to send and/or receive data, where the M channels are channels between the first optical module and the first communication apparatus, the N channels do not include a second channel, the second channel is at least one channel in the M channels that corresponds to the first channel, and N is less than M, where the first communication apparatus sends fault information to a controller based on first abnormality information, where the fault information indicates that an abnormality occurs on the first channel.

In a possible implementation, a communication apparatus 600 shown in FIG. 6 may perform the method steps performed by the first communication apparatus shown in FIG. 5. The communication apparatus 600 includes:
an interface unit 601, configured to obtain that a second channel corresponding to a second optical module is abnormal, where the first channel is a channel between a first optical module and the second optical module, and the second optical module is connected to a second communication apparatus, where that the second communication apparatus obtains that the first channel corresponding to the second optical module is abnormal includes: the second communication apparatus does not receive, through the first channel, an optical signal sent by the first optical module, and the first optical module actively disables light emitting corresponding to the first channel; and
a processing unit 602, configured to use N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

In a possible implementation, a communication apparatus 600 shown in FIG. 6 may perform the method steps performed by the second communication apparatus shown in FIG. 5. The communication apparatus 600 includes:
an interface unit 601, configured to receive fault information from a controller, where the fault information indicates that an abnormality occurs on a first channel, the first channel is a channel between a first optical module and a second optical module, and the second optical module is connected to the second communication apparatus; and
a processing unit 602, configured to use, based on the fault information, N channels in M channels corresponding to the second optical module to send and/or receive data, where the M channels are channels between the second optical module and the second communication apparatus, the N channels do not include a second channel, the second channel is at least one channel in the M channels that corresponds to the first channel, and N is less than M.

In a possible implementation, an optical module 700 shown in FIG. 7 may perform the method steps performed by the first optical module shown in FIG. 3 or FIG. 5. The optical module 700 includes:
a processing unit 702, configured to: disable a signal of a second channel, or send, to a first communication apparatus through the second channel, a signal received through a first channel, where the first channel is a channel between the first optical module and a second optical module, the first optical module is connected to the first communication apparatus, the second channel is at least one channel that is in M channels and that corresponds to the first channel, and the M channels are channels between the first optical module and the first communication apparatus; and
an interface unit 701, configured to use N channels in the M channels to receive and/or send data, where the N channels do not include the second channel, and N is less than M.

The interface unit 701 is further configured to receive control information from the first communication apparatus, where the second control information indicates the first optical module to disable light emitting corresponding to the first channel.

In a possible implementation, an optical module 700 shown in FIG. 7 may perform the method steps performed by the second optical module shown in FIG. 3 or FIG. 5. The optical module 700 includes:
a processing unit 702, configured to: disable a signal of a second channel, or send, to a second communication apparatus through the second channel, a signal received through a first channel, where the first channel is a channel between a first optical module and the second optical module, the second optical module is connected to the second communication apparatus, the second channel is at least one channel that is in M channels and that corresponds to the first channel, and the M channels are channels between the second optical module and the second communication apparatus; and
an interface unit 701, configured to use N channels in the M channels to receive and/or send data, where the N channels do not include the second channel, and N is less than M.

An embodiment of this application includes a data sending system, including a communication apparatus for performing steps 301 to 303 in FIG. 3 and a communication apparatus for performing steps 304 to 306 in FIG. 3.

Alternatively,
the data sending system includes a communication apparatus for performing steps 501 to 503 in FIG. 5 and a communication apparatus for performing steps 504 and 505 in FIG. 5.

For example, FIG. 8 is a diagram of a structure of an NPU according to an embodiment of this application. The NPU may be specifically represented as a neural network processing unit NPU 800. The NPU 800 is mounted to a host CPU (Host CPU) as a coprocessor, and the host CPU allocates a task. A core part of the NPU is an operation circuit 803, and a controller 804 controls the operation circuit 803 to extract matrix data from a memory and to perform a multiplication operation.

In some implementations, the operation circuit 803 internally includes a plurality of processing engines (process engines, PEs). In some implementations, the operation circuit 803 is a two-dimensional systolic array. Alternatively, the operation circuit 803 may be a one-dimensional systolic array, or another electronic circuit that can perform mathematical operations such as multiplication and addition. In some implementations, the operation circuit 803 is a general-purpose matrix processor.

For example, it is assumed that there is an input matrix A, a weight matrix B, and an output matrix C. The operation circuit extracts corresponding data of the matrix B from a weight memory 802, and buffers the corresponding data into each PE in the operation circuit. The operation circuit extracts data of the matrix A from an input memory 801, performs a matrix operation between the data of the matrix A and the matrix B to obtain a partial matrix result or a final matrix result, and stores the result in an accumulator (accumulator) 808.

A unified memory 806 is configured to store input data and output data. Weight data is directly transferred to the weight memory 802 through a direct memory access controller (direct memory access controller, DMAC) DMAC 805. The input data is also transferred to the unified memory 806 through the DMAC.

A bus interface unit (bus interface unit, BIU) 810 is used for interaction between an AXI bus, and the DMAC and an instruction fetch buffer (instruction fetch buffer, IFB) 809.

The bus interface unit (bus interface unit, BIU) 810 is used by the instruction fetch buffer 809 to obtain instructions from an external memory, and is further used by the direct memory access controller 805 to obtain raw data of the input matrix A or the weight matrix B from the external memory.

The DMAC is mainly configured to: transfer the input data in the external memory DDR to the unified memory 806, transfer the weight data to the weight memory 802, or transfer the input data to the input memory 801.

A vector calculation unit 807 includes a plurality of operation processing units. When necessary, further processing is performed on an output of the operation circuit, such as vector multiplication, vector addition, an exponential operation, a logarithmic operation, and value comparison. The vector calculation unit 807 is mainly configured to perform network calculation at a non-convolutional/fully connected layer in a neural network, for example, batch normalization (batch normalization), pixel-level summation, and upsampling on a feature plane.

In some implementations, the vector calculation unit 807 can store a processed output vector to the unified memory 806. For example, the vector calculation unit 807 may apply a linear function and/or a non-linear function to the output of the operation circuit 803, for example, perform linear interpolation on a feature plane extracted at a convolutional layer, and for another example, accumulate vectors of values to generate an activation value. In some implementations, the vector calculation unit 807 generates a normalized value, a pixel-level summation value, or both the normalized value and the pixel-level summation value. In some implementations, the processed output vector can be used as an activation input to the operation circuit 803, for example, used at a subsequent layer in the neural network.

The instruction fetch buffer (instruction fetch buffer) 809 connected to the controller 804 is configured to store instructions used by the controller 804.

The unified memory 806, the input memory 801, the weight memory 802, and the instruction fetch buffer 809 each are an on-chip memory. The external memory is private for a hardware architecture of the NPU.

Any processor mentioned above may be a general-purpose central processing unit, a microprocessor, an ASIC, or one or more integrated circuits, and is configured to control the steps of the method in FIG. 3 or FIG. 5.

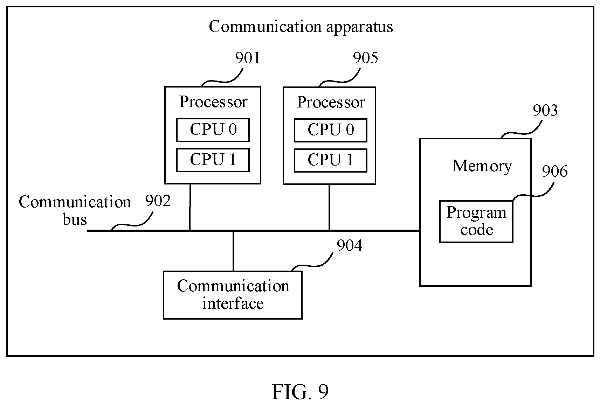

FIG. 9 is a diagram of a structure of a communication apparatus according to an embodiment of this application. The communication apparatus is implemented by using a general bus architecture.

The communication apparatus includes at least one processor 901, a communication bus 902, a memory 903, and at least one communication interface 904.

Optionally, the processor 901 is a general-purpose CPU, an NP, or a microprocessor, or is one or more integrated circuits configured to implement the solutions of this application, for example, an application-specific integrated circuit (application-specific integrated circuit, ASIC), a programmable logic device (programmable logic device, PLD), or a combination thereof. The PLD is a complex programmable logic device (complex programmable logic device, CPLD), a field programmable logic gate array (field programmable gate array, FPGA), generic array logic (generic array logic, GAL), or any combination thereof.

The communication bus 902 is configured to transfer information between the foregoing components. The communication bus 902 is classified into an address bus, a data bus, a control bus, and the like. For ease of representation, only one thick line is used to represent the bus in the figure, but this does not mean that there is only one bus or only one type of bus.

Optionally, the memory 903 is a read-only memory (read-only memory, ROM) or another type of static storage device that can store static information and instructions. Alternatively, the memory 903 is a random access memory (random access memory, RAM) or another type of dynamic storage device that can store information and instructions. Alternatively, the memory 903 is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. Optionally, the memory 903 exists independently, and is connected to the processor 901 through the communication bus 902. Optionally, the memory 903 and the processor 901 are integrated.

The communication interface 904 uses any apparatus such as a transceiver, and is configured to communicate with another device or a communication network. The communication interface 904 includes a wired communication interface. Optionally, the communication interface 904 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

In specific implementation, in an embodiment, the processor 901 includes one or more CPUs, for example, a CPU 0 and a CPU 1 shown in FIG. 9.

In specific implementation, in an embodiment, the communication apparatus includes a plurality of processors, for example, the processor 901 and a processor 905 shown in FIG. 9. Each of the processors is a single-core processor (single-CPU) or a multi-core processor (multi-CPU). The processor herein is one or more devices, circuits, and/or processing cores configured to process data (for example, computer program instructions).

In some embodiments, the memory 903 is configured to store program code 906 for executing the solutions of this application, and the processor 901 executes the program code 906 stored in the memory 903. In other words, the communication apparatus implements the foregoing method embodiments by using the processor 901 and the program code 906 in the memory 903.

In addition, it should be noted that the described apparatus embodiments are merely examples. The units described as separate parts may or may not be physically separate, and parts displayed as units may or may not be physical units, that is, may be located in one position, or may be distributed on a plurality of network units. Some or all of the modules may be selected based on an actual requirement to achieve the objectives of the solutions of embodiments. In addition, in the accompanying drawings of apparatus embodiments provided in this application, connection relationships between the modules indicate that the modules have communication connections with each other, which may be specifically implemented as one or more communication buses or signal cables.

An embodiment of this application further provides a computer-readable storage medium, including instructions. When the instructions are run on a computer, the computer is enabled to perform the method in the foregoing embodiments.

An embodiment of this application further provides a computer program product including instructions. When the computer program product runs on a computer, the computer is enabled to perform the method in the foregoing embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to a conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method according to embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

## Claims

1. A data sending method, comprising:
obtaining, by a first communication apparatus, that a first channel corresponding to a first optical module is abnormal, wherein the first channel is a channel between the first optical module and a second optical module, and the first optical module is connected to the first communication apparatus;
using, by the first communication apparatus, N channels in M channels corresponding to the first optical module to send and/or receive data, wherein the M channels are channels between the first optical module and the first communication apparatus, the N channels do not comprise a second channel, the second channel is at least one channel in the M channels that corresponds to the first channel, and N is less than M; and
sending, by the first communication apparatus, control information to the first optical module, wherein the control information indicates the first optical module to disable light emitting corresponding to the first channel.

2. The method according to claim 1, wherein a channel other than the N channels in the M channels is not used to send and/or receive data.

3. The method according to claim 1 or 2, wherein the control information further indicates the first optical module to disable light emitting corresponding to a third channel, and the third channel is a channel between the first optical module and the second optical module.

4. The method according to any one of claims 1 to 3, wherein an abnormality occurs on a fourth channel, the fourth channel is a channel between the first optical module and the second optical module, and using, by the first communication apparatus, the N channels in the M channels corresponding to the first optical module to send and/or receive data comprises:
if the first channel and the fourth channel meet a rate reduction condition, using, by the first communication apparatus, the N channels in the M channels corresponding to the first optical module to send and/or receive data, wherein the N channels do not comprise a fifth channel, and the fifth channel is at least one channel in the M channels that corresponds to the fourth channel.

5. A data sending method, comprising:
obtaining, by a first communication apparatus, that a first channel corresponding to a first optical module is abnormal, wherein the first channel is a channel between the first optical module and a second optical module, and the first optical module is connected to the first communication apparatus; and
using, by the first communication apparatus, N channels in M channels corresponding to the first optical module to send and/or receive data, wherein the M channels are channels between the first optical module and the first communication apparatus, the N channels do not comprise a second channel, the second channel is at least one channel in the M channels that corresponds to the first channel, and N is less than M; and sending, by the first communication apparatus, fault information to a controller, wherein the fault information indicates that an abnormality occurs on the first channel.

6. The method according to claim 5, wherein the fault information comprises at least one of the following: first port information, second port information, a quantity of channels of a first port, and fault information of the first channel, the first port information comprises a port number and an internet protocol IP address of the first port, the second port information comprises a port number and an IP address of a second port, the first port is a local port, and the second port is a peer port.

7. The method according to claim 5 or 6, wherein a channel other than the N channels in the M channels is not used to send and/or receive data.

8. The method according to any one of claims 5 to 7, wherein an abnormality occurs on a fourth channel, the fourth channel is a channel between the first optical module and the second optical module, and using, by the first communication apparatus, the N channels in the M channels corresponding to the first optical module to send and/or receive data comprises:
if the first channel and the fourth channel meet a rate reduction condition, using, by the first communication apparatus, the N channels in the M channels corresponding to the first optical module to send and/or receive data, wherein the N channels do not comprise a fifth channel, and the fifth channel is at least one channel in the M channels that corresponds to the fourth channel.

9. A data sending method, comprising:
obtaining, by a second communication apparatus, that a first channel corresponding to a second optical module is abnormal, wherein the first channel is a channel between a first optical module and the second optical module, and the second optical module is connected to the second communication apparatus, wherein the obtaining, by the second communication apparatus, that the first channel corresponding to the second optical module is abnormal comprises: skipping receiving, by the second optical module through the first channel, an optical signal sent by the first optical module, and actively disabling, by the first optical module, light emitting corresponding to the first channel; and
using, by the second communication apparatus, N channels in M channels corresponding to the second optical module to send and/or receive data, wherein the M channels are channels between the second optical module and the second communication apparatus, the N channels do not comprise a second channel, the second channel is at least one channel in the M channels that corresponds to the first channel, and N is less than M.

10. The method according to claim 9, wherein a channel other than the N channels in the M channels is not used to send and/or receive data.

11. The method according to claim 9 or 10, wherein an abnormality occurs on a fourth channel, the fourth channel is a channel between the first optical module and the second optical module, and using, by the second communication apparatus, the N channels in the M channels corresponding to the second optical module to send and/or receive the data comprises:
if the first channel and the fourth channel meet a rate reduction condition, using, by the second communication apparatus, the N channels in the M channels corresponding to the second optical module to send and/or receive the data, wherein the N channels do not comprise a fifth channel, and the fifth channel is at least one channel in the M channels that corresponds to the fourth channel.

12. A data sending method, comprising:
receiving, by a second communication apparatus, fault information from a controller, wherein the fault information indicates that an abnormality occurs on a first channel, the first channel is a channel between a first optical module and a second optical module, and the second optical module is connected to the second communication apparatus; and
using, by the second communication apparatus based on the fault information, N channels in M channels corresponding to the second optical module to send and/or receive data, wherein the M channels are channels between the second optical module and the second communication apparatus, the N channels do not comprise a second channel, the second channel is at least one channel in the M channels that corresponds to the first channel, and N is less than M.

13. The method according to claim 12, wherein the fault information comprises at least one of the following: first port information, second port information, a quantity of channels of a first port, and fault information of the first channel, the first port information comprises a port number and an internet protocol IP address of the first port, the second port information comprises a port number and an IP address of a second port, the first port is a local port, and the second port is a peer port.

14. The method according to claim 12 or 13, wherein a channel other than the N channels in the M channels is not used to send and/or receive data.

15. The method according to any one of claims 12 to 14, wherein an abnormality occurs on a fourth channel, the fourth channel is a channel between the first optical module and the second optical module, and using, by the second communication apparatus, the N channels in the M channels corresponding to the second optical module to send and/or receive the data comprises:
if the first channel and the fourth channel meet a rate reduction condition, using, by the second communication apparatus, the N channels in the M channels corresponding to the second optical module to send and/or receive the data, wherein the N channels do not comprise a fifth channel, and the fifth channel is at least one channel in the M channels that corresponds to the fourth channel.

16. A data sending method, comprising:
skipping receiving, by a first optical module through a first channel, an optical signal sent by a second optical module, and disabling a signal of a second channel, or receiving, by the first optical module, an abnormal signal through the first channel, wherein the first channel is a channel between the first optical module and the second optical module, the first optical module is connected to the first communication apparatus, the second channel is at least one channel that is in M channels and that corresponds to the first channel, and the M channels are channels between the first optical module and the first communication apparatus;
using, by the first optical module, N channels in the M channels to receive and/or send data, wherein the N channels do not comprise the second channel, and N is less than M; and
receiving, by the first optical module, control information from the first communication apparatus, wherein the second control information indicates the first optical module to disable light emitting corresponding to the first channel.

17. The method according to claim 16, wherein a channel other than the N channels in the M channels is not used to send and/or receive data.

18. The method according to claim 16 or 17, wherein the control information further indicates the first optical module to disable light emitting corresponding to the second channel, the second channel is a channel between the first optical module and the second optical module, the M channels comprise the second channel, and the N channels do not comprise the second channel.

19. A data sending method, comprising:
skipping receiving, by a second optical module through a first channel, an optical signal sent by a first optical module, and disabling a signal of a second channel, or receiving, by the second optical module, an abnormal signal through the first channel, wherein the first channel is a channel between the first optical module and the second optical module, the second optical module is connected to the second communication apparatus, the second channel is at least one channel that is in M channels and that corresponds to the first channel, and the M channels are channels between the second optical module and the second communication apparatus; and
using, by the second optical module, N channels in the M channels to receive and/or send data, wherein the N channels do not comprise the second channel, and N is less than M.

20. The method according to claim 19, wherein a channel other than the N channels in the M channels is not used to send and/or receive data.

21. A communication apparatus, configured to perform the method according to any one of claims 1 to 4.

22. A communication apparatus, configured to perform the method according to any one of claims 5 to 8.

23. A communication apparatus, configured to perform the method according to any one of claims 9 to 11.

24. A communication apparatus, configured to perform the method according to any one of claims 12 to 15.

25. An optical module, configured to perform the method according to any one of claims 16 to 18.

26. An optical module, configured to perform the method according to either of claims 19 and 20.

27. A communication apparatus, comprising:
a processor, configured to execute a program, to enable the communication apparatus to perform the method according to any one of claims 1 to 4.

28. A communication apparatus, comprising:
a processor, configured to execute a program, to enable the communication apparatus to perform the method according to any one of claims 5 to 8.

29. A communication apparatus, comprising:
a processor, configured to execute a program, to enable the communication apparatus to perform the method according to any one of claims 9 to 11.

30. A communication apparatus, comprising:
a processor, configured to execute a program, to enable the communication apparatus to perform the method according to any one of claims 12 to 15.

31. An optical module, comprising:
a processor, configured to execute a program, to enable the optical module to perform the method according to any one of claims 16 to 18.

32. An optical module, comprising:
a processor, configured to execute a program, to enable the optical module to perform the method according to either of claims 19 and 20.

33. A computer-readable storage medium, comprising instructions, wherein when the instructions are run on a computer, the computer is enabled to perform the method according to any one of claims 1 to 4, the computer is enabled to perform the method according to any one of claims 5 to 8, the computer is enabled to perform the method according to any one of claims 9 to 11, the computer is enabled to perform the method according to any one of claims 12 to 15, the computer is enabled to perform the method according to any one of claims 16 to 18, or the computer is enabled to perform the method according to either of claims 19 and 20.

34. A computer program product comprising instructions, wherein when the computer program product runs on a computer, the computer is enabled to perform the method according to any one of claims 1 to 4, the computer is enabled to perform the method according to any one of claims 5 to 8, the computer is enabled to perform the method according to any one of claims 9 to 11, the computer is enabled to perform the method according to any one of claims 12 to 15, the computer is enabled to perform the method according to any one of claims 16 to 18, or the computer is enabled to perform the method according to either of claims 19 and 20.
